Europäisches Patentamt

European Patent Office

Office européen des brevets

(11) Veröffentlichungsnummer: **0 324 417**

**A2**

(12) # EUROPÄISCHE PATENTANMELDUNG

(21) Anmeldenummer: **89100301.4**

(22) Anmeldetag: **10.01.89**

(51) Int. Cl.⁴: **B60G 17/00**

(30) Priorität: **12.01.88 DE 3800541**

(43) Veröffentlichungstag der Anmeldung:
**19.07.89 Patentblatt 89/29**

(84) Benannte Vertragsstaaten:
**BE DE ES FR GB IT NL SE** .

(71) Anmelder: **August Bilstein GmbH & Co KG**
**August-Bilstein-Strasse**
**D-5828 Ennepetal-Altenvoerde 13(DE)**

(72) Erfinder: **Hölscher, Reinhard, Dr. Ing.**
**Kottenstrasse 25**
**D-4796 Salzkotten(DE)**
Erfinder: **Hoffmann, Hans Jürgen**
**Unterkohlfurth 38 a**
**D-5600 Wuppertal 12(DE)**

(74) Vertreter: **Sturies, Herbert et al**
**Patentanwälte Dr. Ing. Dipl. Phys. Herbert**
**Sturies Dipl. Ing. Peter Eichler**
**Brahmsstrasse 29, Postfach 20 12 42**
**D-5600 Wuppertal 2(DE)**

(54) **Verfahren zum Einstellen einer Niveauregelvorrichtung für Kraftfahrzeuge und Niveauregelvorrichtung.**

(57) Verfahren zum Einstellen einer Niveauregelvorrichtung für Kraftfahrzeuge (1), bei dem mindestens eine der Fahrzeugkarosserie (9) gebildete Bezugsstelle (3) des Kraftfahrzeugs (1) in eine vorbestimmte Stellung mit einer Sollhöhe (H) gebracht wird, die unter Bezugnahme auf das Fahrwerk (14) mit einem Speicherschalter (6) abgespeichert wird.

Um das Verfahren so zu verbessern, daß die Einstellung der Sollhöhe und die Abspeicherung des dementsprechenden Meßwertes mit einfachen Mitteln und auf einfache Weise erreicht werden, wird das Verfahren so durchgeführt, daß die Bezugsstelle (3) des Kraftfahrzeugs (1) durch dessen Anheben mit einer kraftfahrzeugunabhängigen Einrichtung (4) in die durch letztere vorbestimmte Stellung gebracht, in dieser Stellung die Sollhöhe (H) der Bezugsstelle (3) des Kraftfahrzeugs (1) mit einer elektrischen Höhenmeßeinrichtung (2) des Kraftfahrzeugs (1) erfaßt und deren der Sollhöhe (H) entsprechender elektrischer Meßwert über den Speicherschalter (6) abgespeichert wird.

FIG. 2b

**Verfahren zum Einstellen einer Niveauregelvorrichtung für Kraftfahrzeuge und Niveauregelvorrichtung**

Die Erfindung bezieht sich auf ein Verfahren zum Einstellen einer Niveauregelvorrichtung für Kraftfahrzeuge, bei dem mindestens eine von der Fahrzeugkarosserie gebildete Bezugsstelle des Kraftfahrzeugs in eine vorbestimmte Stellung mit einer Sollhöhe gebracht wird, die unter Bezugnahme auf das Fahrwerk mit einem Speicherschalter abgespeichert wird.

Niveauregelvorrichtungen für Kraftfahrzeuge dienen dazu, die Lage der Karosserie eines Kraftfahrzeugs über dem Boden in bestimmter Weise zu beeinflussen. Hierzu ist es erforderlich, die Niveauregelung ausgehend von einer bestimmten Sollhöhe durchzuführen. Wird das Fahrzeug also beladen und dadurch die Karosserie abgesenkt, so bewirkt die Niveauregelvorrichtung, daß die Karosserie wieder auf Sollhöhe angehoben wird. Voraussetzung hierfür ist, daß sich die Niveauregelvorrichtung die Sollhöhe merken kann. Sie muß also in der Vorrichtung abgespeichert werden. Hierzu ist es allgemein bekannt, das Kraftfahrzeug bzw. dessen Karosserie mit Hilfe des Reglers der Niveauregelvorrichtung auf die gewünschte Sollhöhe einzustellen, nämlich mit einem Ventil der hydraulischen Anlage der Niveauregelvorrichtung, wobei die Höhenmeßeinrichtung zur Ermittlung der Sollhöhe eine beliebig geartete kraftfahrzeugexterne Einrichtung ist. Ein solches Einstellverfahren ist jedoch nachteilig, weil es eine Fachkraft erfordert, um in die Niveauregelvorrichtung einzugreifen und eine weitere Fachkraft, um das Messen durchzuführen. Dabei erfolgt die Abspeicherung dadurch, daß der Niveauregler in vorbestimmter Weise eingestellt wird.

Aus der DE-OS 23 04 295 ist eine Niveauregelvorrichtung bekannt, bei der ein Speicherschalter an der Karosserie angebracht ist, dessen beide einerseits das Aufregeln und andererseits das Abregeln bewirkende Schaltkontakte von einem auf der Achse abgestützten Steuergestänge geschlossen werden, wenn sich die Karosserie absenkt oder anhebt. Die Justierung des Steuergestänges in der richtigen Position zwischen den Schaltkontakten ist aufwendig und unzuverlässig.

Der Erfindung liegt die Aufgabe zugrunde, ein Verfahren der eingangs genannten Art so zu verbessern, daß die Einstellung der Sollhöhe und die Abspeicherung des dementsprechenden Meßwertes mit einfachen Mitteln und auf einfache Weise erreicht werden.

Die Aufgabe wird dadurch gelöst, daß die Bezugsstelle des Kraftfahrzeugs durch dessen Anheben mit einer kraftfahrzeugunabhängigen Einrichtung in die durch letztere vorbestimmte Stellung gebracht. in dieser Stellung die Sollhöhe der Bezugsstelle des Kraftfahrzeugs mit einer elektrischen Höhenmeßeinrichtung des Kraftfahrzeugs erfaßt und deren der Sollhöhe entsprechender elektrischer Meßwert über den Speicherschalter abgespeichert wird.

Für die Erfindung ist von Bedeutung, daß das Kraftfahrzeug mit einer Einrichtung angehoben wird, die unabhängig vom Kraftfahrzeug ist und infolgedessen so eingerichtet werden kann, daß eine Fachkraft zu ihrer Bedienung nicht erforderlich ist. Es können also vorprogrammierte Hubeinrichtungen verwendet werden, die das Kraftfahrzeug bzw. dessen Karosserie auf die vorbestimmte Sollhöhe anheben, und zwar lediglich durch Knopfdruck, wobei die Hubhöhe, also die Sollhöhe, unter Berücksichtigung der unterschiedlichen Kraftfahrzeuge entsprechend unterschiedlich vorbestimmt werden kann. Diese Sollhöhe wird dann mit der ohnehin vorhandenen elektrischen Höhenmeßeinrichtung des Kraftfahrzeugs erfaßt und abgespeichert, wobei dieses Verfahren durch die bloße Betätigung eines Speicherschalters äußerst einfach ist. Es kann darüber hinaus auch schnell verfahren werden, weil die kraftfahrzeugunabhängige Einrichtung auf eine solche schnelle Durchführung der Einstellung ausgelegt werden kann und auch die Messung sowie die Abspeicherung des Meßwertes schnell möglich sind. Darüber hinaus werden Fehlerquellen ausgeschaltet, die kraftfahrzeugbedingt sind, wie Toleranzen in den Meßeinrichtungen oder in den Karosserien bzw. im Fahrwerk. Geht man davon aus, daß die Höhenmeßeinrichtung beispielsweise zwischen der Karosserie und einem Torsionsstab des Fahrgestells mißt, so spielt es keine Rolle, daß der Torsionsstab aufgrund von Toleranzen des Fahrwerks bei der Vorderachse beispielsweise etwas tiefer liegt, als bei der Hinterachse. Es würde auch keine Rolle spielen, daß eine Meßeinrichtung an der Vorderachse anders justiert ist, als eine Meßeinrichtung an der Hinterachse. Die Niveauregelvorrichtung würde, ausgehend von der durch die kraftfahrzeugunabhängige Einrichtung bestimmten Sollhöhe und einem dadurch bestimmten Meßergebnis, stets für eine Ausrichtung der Karosserie auf dieses Nullniveau bzw. diese Sollhöhe sorgen, also ungeachtet der erwähnten Toleranzen.

Der Speicherschalter wird nach dem Einschalten der Zündung wirksam, wodurch sichergestellt wird, daß die Abspeicherung erst möglich ist, wenn die Höhenmeßeinrichtung des Kraftfahrzeugs ordnungsgemäß mit Strom versorgt ist.

Bei eingeschalteter Zündung und nicht betätigtem Speicherschalter erfolgt eine Fehleranzeige, um die das Kraftfahrzeug bearbeitende Person darauf hinzuweisen, daß die Niveauregelvorrichtung noch nicht die Sollhöhe abgespeichert hat.

Die Erfindung bezieht sich auch auf eine Niveauregelvorrichtung für Kraftfahrzeuge, mit lasttragenden Federbeinen, die entsprechend einer Sollhöhe mindestens einer von der Fahrzeugkarosserie gebildeten Bezugsstelle des Kraftfahrzeugs entsprechend hydraulisch beaufschlagbar sind, mit einem die Sollhöhe unter Bezugnahme auf das Fahrwerk abspeichernden Speicherschalter, und mit einer hydraulischen Pumpeinrichtung, mit dem Kennzeichen, daß die Niveauregelvorrichtung eine die Sollhöhe des Kraftfahrzeugs einstellende kraftfahrzeugunabhängige Einrichtung aufweist, und daß an einen Rechner ein den bei Sollhöhe des Kraftfahrzeugs mit einer Höhenmeßeinrichtung des Kraftfahrzeugs ermittelten Meßwert abspeichernder, mit dem Speicherschalter beaufschlagbarer Sollwertspeicher angeschlossen ist.

Mit einer solchen Regelvorrichtung kann deren erforderliche Nullung, also die Abspeicherung des die Sollhöhe bestimmenden Meßwerts der Höhenmeßeinrichtung nach Einstellung der Sollhöhe des Kraftfahrzeugs einfach, schnell und unter Ausschaltung kraftfahrzeugbedingter Toleranzen vorgenommen werden.

Als die Sollhöhe des Kraftfahrzeugs einstellende Einrichtung sind die Fahrzeugkarosserie ausrichtende Wagenheber vorhanden, beispielsweise hydraulisch wirkende, fernbeaufschlagbare Zylinder, deren Kolbenstangen an den zum Anheben des Kraftfahrzeugs bestimmten Punkten der Karosserie angreifen.

Der Rechner weist eine Rechenschaltung zur Berechnung von in Abhängigkeit von der Fahrzeuggeschwindigkeit wirksam werdender, oberhalb und unterhalb der Sollhöhe liegender Niveaugrenzwerte auf, um unter Berücksichtigung der Sollhöhe der Fahrzeugkarosserie deren Höchst- und Tiefstniveau zu berechnen, das jeweils automatisch oder von Hand gesteuert wirksam wird.

In Ausgestaltung der Erfindung ist je eine Bezugsstelle für die Vorderachse und für die Hinterachse des Kraftfahrzeugs vorgesehen und für die Fehleranzeige ist ei ne in Verbindung mit Stellungsmeldeleuchten beider Achsen wirksame Feherlanzeigeleuchte vorhanden. Damit kann eine Fehleranzeige für den Fall erfolgen, daß der Sollwertspeicher einen der Sollhöhe des Kraftfahrzeugs entsprechenden Meßwert nicht abgespeichert hat, wobei die Stellungsmeldeleuchten der beiden Achsen als Kodierungssignal dienen, sofern die Fehleranzeigeleuchte beaufschlagt ist, während sie im Normalfall anzeigen, ob sich die Fahrzeugkarosserie auf Sollhöhe befindet, oder auf dem oberen oder unteren Grenzniveau.

Die Erfindung wird anhand einer in der Zeichnung dargestellten Niveauregelvorrichtung erläutert.

Es zeigt:

Fig. 1 eine Prinzipskizze einer Radaufhängung eines Kraftfahrzeugs,

Fig. 2a bis 2c die Einstellung der Sollhöhe einer Fahrzeugkarosserie in mehreren Verfahrensschritten in schematischer Darstellung,

Fig. 3 ein Steuergerät der Niveauregelvorrichtung,

Fig. 4 ein Flußdiagramm der Niveauregelvorrichtung für den Bereich der Abspeicherung des der Sollhöhe entsprechenden Meßwerts, und

Fig. 5 eine zur Niveauregelung erforderliche Hydraulikanlage.

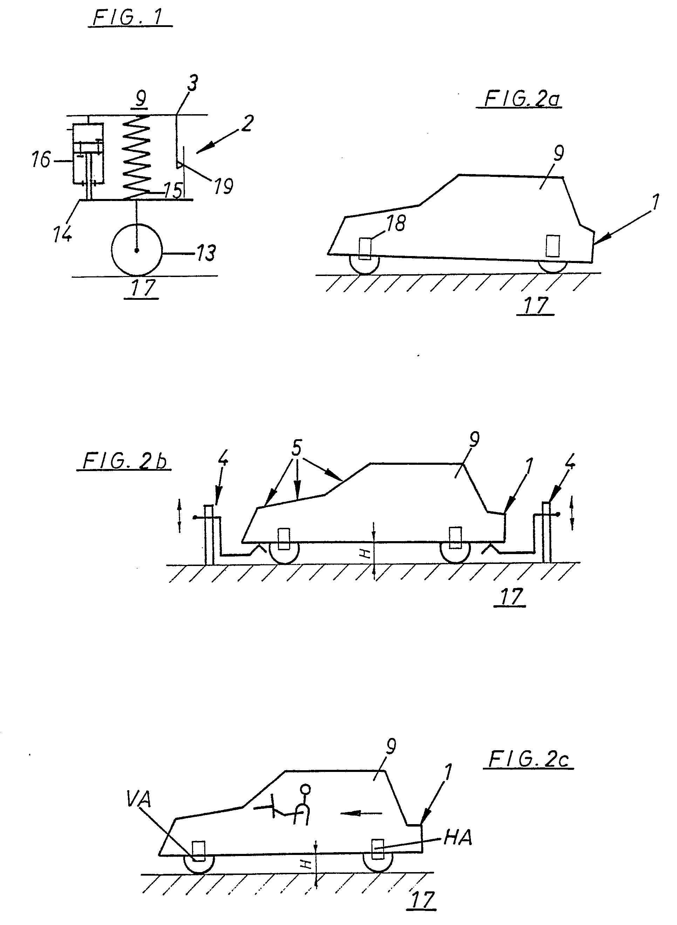

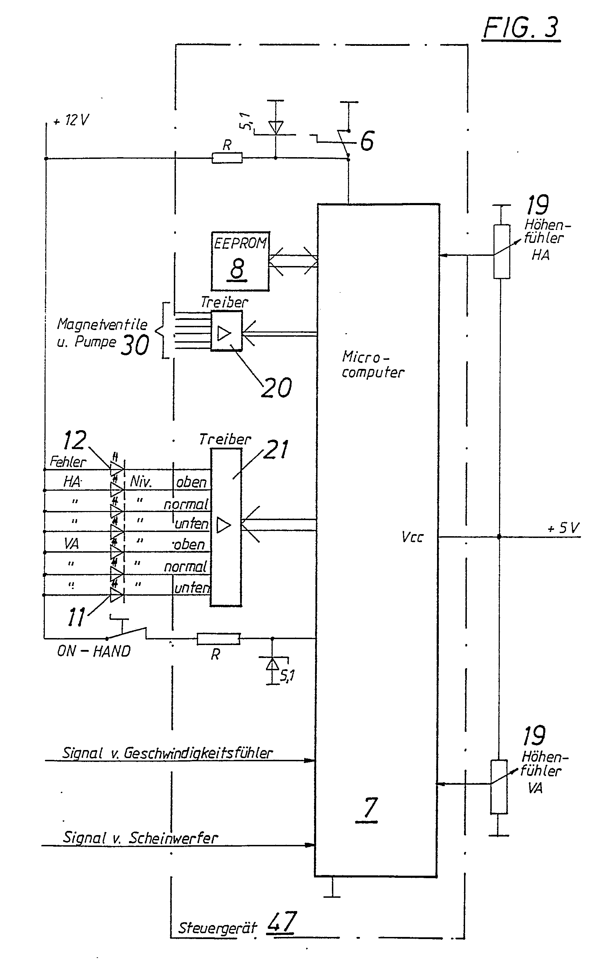

Jedes Rad 13 eines Kraftfahrzeugs 1 wird über einen Teil eines Fahrwerks 14 mit der Karosserie 9 verbunden, wobei eine Feder 15 und ein Federbein 16 als die Last der Karosserie 9 tragende und über das Rad 13 auf die Straße 17 abtragende Teile vorhanden sind. Entsprechendes wird in den Fig.2a bis 2c durch die Rechtecke 18 symbolisiert. Außerdem ist in Fig.1 noch eine Höhenmeßeinrichtung 2 symbolisch dargestellt worden, die insbesondere einen Höhenfühler 19 aufweist, mit dem die Lage einer Bezugsstelle 3 der Karosserie relativ zum Fahrwerk 14 festgestellt wird, also beispielsweise relativ zu einem Torsionsstab, der zwischen den Rädern einer oder beider Achsen wirkt. Der Höhenfühler 19 ist beispielsweise ein Potentiometer oder ein optoelektronischer Geber, dessen Meßwerte im Steuergerät 47 ausgewer tet werden, das insoweit Bestandteil der Höhenmeßeinrichtung 2 ist.

Gemäß Fig.2a hat das Kraftfahrzeug 1 nach seiner Fertigstellung eine undefinierte Höhenlage, bedingt dadurch, daß die Hydraulikanlage nicht oder in nicht kontrollierter Weise gefüllt ist, oder daß die Karosserie 9 nicht auf die richtige Sollhöhe eingestellt wurde, wobei sich auch Toleranzen bei der Herstellung der Karosserie oder des Fahrwerks oder des Reifendrucks auswirken können.

Gemäß Fig.2b wird das Fahrzeug bzw. dessen Bezugsstelle 3 von einer kraftfahrzeugunabhängigen Einrichtung 4 in eine durch diese Einrichtung bestimmte Stellung 5 gebracht, in der sie sich in einem definierten Abstand, der Sollhöhe H, über dem Boden 17 befindet. Diese Einrichtung 4 besteht beispielsweise aus Wagenhebern, die die Karosserie 9 entsprechend den Pfeilen anheben oder absenken können, beispielsweise auf Knopfdruck automatisch entsprechend einem vorher festgelegten Hubwert, der vom Kraftfahrzeug zu Kraftfahrzeug auch wechseln kann. Wenn das Kraftfahrzeug 1 bzw. dessen Karosserie 9 derart ausgerichtet ist, muß dafür gesorgt werden, daß die dieser Stellung entsprechende Sollhöhe H der Bezugsstelle 3 des Kraftfahrzeugs 1 als maßgeblich für sämtliche Tätigkeiten der Niveauregelvorrichtung festgehalten wird. Dies erfolgt mit Hilfe des Steuergeräts 47 und der Höhenmeßeinrichtung 2 des Kraftfahrzeugs 1, deren Höhenfühler 19 an einen Rechner 7 des Steuergeräts 47 angeschlossen sind. Aus Fig.3 ist ersichtlich, daß für die Vorderachse VA und die Hinterachse HA jeweils ein Höhenfühler vorhanden ist, der als Potentiometer symbolisiert ist, also aus einem Widerstand besteht, der darstellungsgemäß mit einer Spannung versorgt wird. Ein Teil dieser Spannung wird abgegriffen und dem Rechner 7 als Meßwert zugeleitet, wobei der Abgriff entsprechend dem Abstand der Bezugsstelle 3 der Karosserie 9 des Kraftfahrzeugs 1 von einem Bezugspunkt des Fahrgestells 14 erfolgt. Bei geeigneter Ausbildung des Höhenfühlers kann diese Messung auch gegenüber dem Boden 17 vorgenommen werden.

Die Abspeicherung des von der Höhenmeßeinrichtung 2 bzw. deren Höhenfühler 19 festgestellten Sollhöhe H erfolgt über den Rechner 7 mit einem Speicherschalter 6 in einen Sollwertspeicher 8. Der Sollwertspeicher 8 ist ein nicht flüchtiger Speicher, beispielsweise ein EEPROM. Der Speicherschalter 6 sorgt für dessen Belegung, indem er geöffnet wird. Das zeigt Fig.3, die die Spannungsversorgung des Rechners 7 bzw. des den Speicher 8 betreffenden Teils des Rechners 7 betrifft. Diese Stromversorgung erfolgt über einen Widerstand R und ist durch den gegen Masse gelegten Schalter 6 unterbunden. Erst wenn der Schalter 6 geöffnet ist, ist der Rechner 7 in der Lage, dem Speicher 8 ein entsprechendes Speichersignal zu übermitteln. Der Rechner 7 sorgt aber nicht nur für die Einspeicherung eines der Sollhöhe H entsprechenden Meßwerts in den Speicher 8, sondern verwertet auch diesen Speicherwert bei einer Berechnung von Niveaugrenzwerten für die Vorderachse VA und die Hinterachse HA bzw. verwertet den Speicherwert bei der Niveauregelung. Die hierzu erforderlichen elektrischen Schaltungen sind an sich bekannt und infolgedessen nicht dargestellt.

Außerdem hat das Steuergerät 47 einen Treiber 20 zur Beaufschlagung von Magnetventilen und Pumpen einer Hydraulikanlage über Steuerleitungen 30, sowie einen Treiber 21 zur Beaufschlagung von Stellungsmeldeleuchten 11 und zur Beaufschlagung einer Fehleranzeigeleuchte 12. Diese Leuchten sind beispielsweise als LED-Leuchtdioden ausgebildet und sind an die Versorgungsspannung angeschlossen. Die Stellungsmeldeleuchten 11 sind entsprechend Fig.3 jeweils dreifach für die Vorderachse VA und für die Hinterachse HA vorhanden, wobei außer den der Sollhöhe H entsprechenden Niveaus der Karosserie 9 jeweils ein oberes und ein unteres Grenzniveau signalisiert werden kann, welches ausgehend von dem Normalniveau berechnet und gespeichert werden kann und infolgedessen automatisch oder von Hand einstellbar ist. Außerdem hat das Steuergerät 47 noch die Möglichkeit, Signale von Geschwindigkeitsfühlern und von Scheinwerferstellungen zu verarbeiten, beispielsweise um nach Erreichen einer bestimmten Geschwindigkeit durch das Kraftfahrzeug automatisch eine Absenkung des Niveaus der Karosse 9 auf ein tieferes Niveau zu bewirken, beispielsweise auf das untere Grenzniveau. Mit Hilfe des vom Scheinwerfer kommenden Signals kann der Rechner 7 überprüfen, ob die Scheinwerferstellung richtig ist, um so gegebenenfalls eine Korrektur der Stellung der Karosserie zu erreichen.

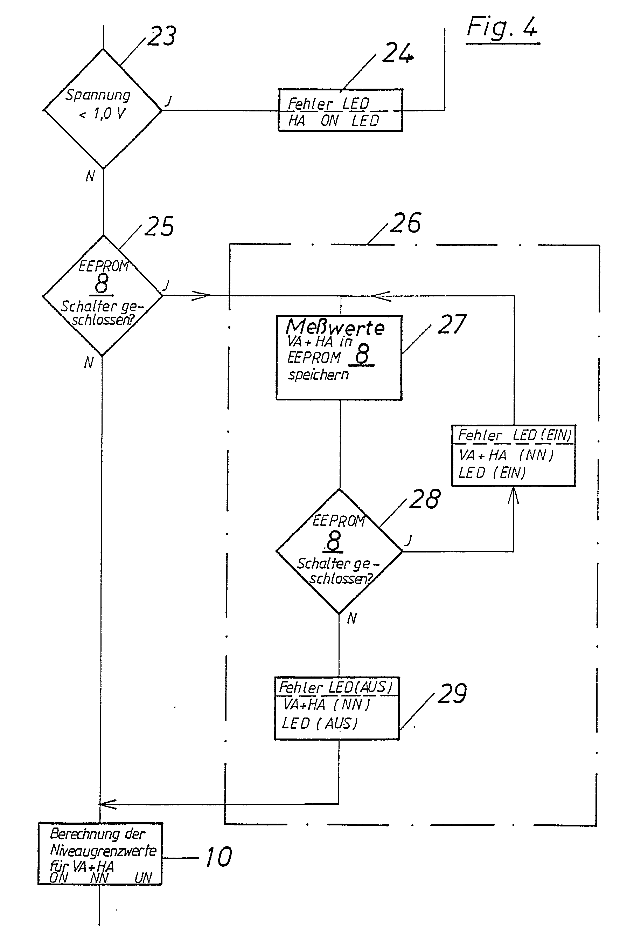

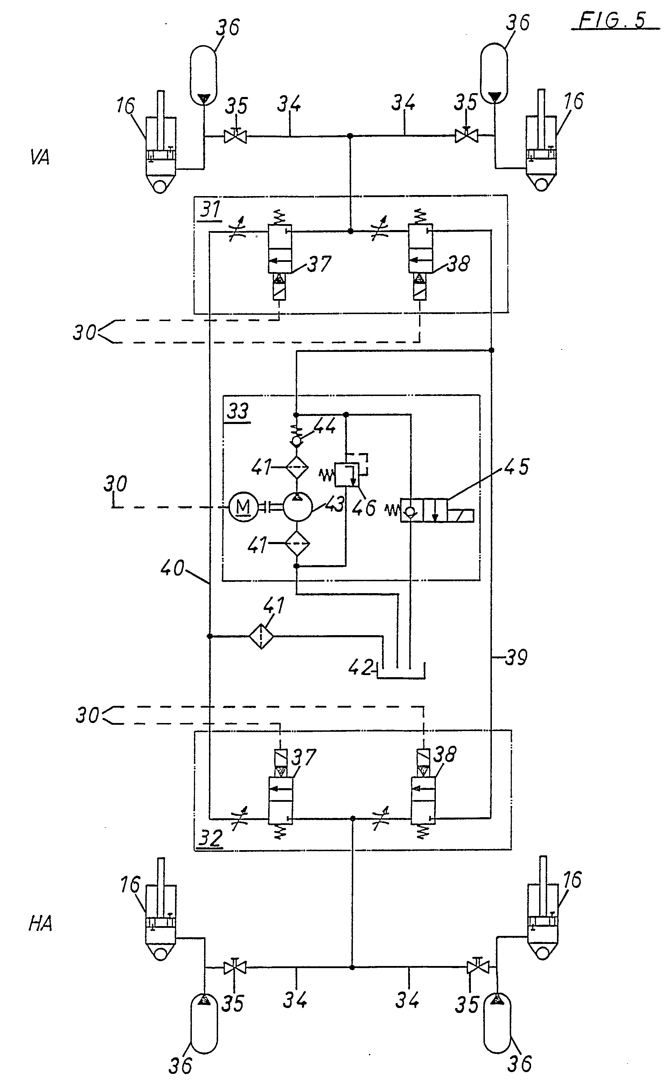

Das Verfahren im Zusammenhang mit der Abspeicherung des der Sollhöhe H entsprechenden Meßwerts der Höhenmeßeinrichtung 2 wird anhand der Fig.4 erläutert. Zunächst wird die Zündung eingeschaltet und es werden einige Überprüfungen durchgeführt, z.B. die Überprüfung des Sensors bzw. des Höhenfühlers 19 der Hinterachse HA dadurch, daß festgestellt wird, ob die Spannung kleiner als 1,0 Volt ist oder nicht. Bejahendenfalls liegt ein Fehler vor, weil die Versorgungsspannung 5 Volt beträgt und man gelangt von der Verzweigung 23 zur Fehleranzeige 24, dergemäß die Fehlerleuchte 12 und entsprechend einem zuvor bestimmten Code die Stellungsmeldeleuchte 11 für die Hinterachse HA, oberes Niveau ON aufleuchtet. Ist jedoch der Höhenfühler 19 für die Hinterachse HA in Ordnung, so gelangt man von der Verzweigung 23 in die Verzweigung 25 des Speichers 8, in der geprüft wird, ob der Speicherschalter 6 geschlossen ist oder nicht. Da der Schalter 6 bestimmungsgemäß geschlossen ist, wenn die Sollhöhe bzw. der dieser entsprechende elektrische Wert noch nicht abgespeichert ist, gelangt der Prüfvorgang in den Abspeicherbereich 26 des Rechners 7, und dort in denjenigen Operationsbereich 27, der für die Abspeicherung der Meßwerte der Vorderachse VA und der Hinterachse HA in den Sollwertspeicher 8 verantwortlich ist. Von dort aus wird zunächst geprüft, ob der Sollwertspeicher 8 bereits abgespeichert hat, also der Speicherschalter 6 geschlossen ist oder nicht. Im Falle des verwendeten EEPROM ist der Speicherschalter 6 als Brücke ausgebildet, die gezogen werden muß, damit der Speicherschalter 6 als offen angesehen werden kann. Ist er jedoch geschlossen, so gelangt man von der Verzweigung 28 in denjenigen Bereich des Rechners 7, der die Fehleranzeigeleuchte 12 aufleuchten läßt, wie auch die Stellungsmeldeleuchten 11 der Vorderachse VA und der Hinterachse HA für das Normalniveau. In diesem Fall gelangt der Programmablauf wieder in den Bereich 27 und der Vorgang wird solange wiederholt, wie der Rechner 7 bzw. der Sollwertspeicher 8 die bestimmte Stellung 5 der Karosserie 9 nicht abspeichern kann, weil der Speicherschalter 6 geschlossen ist. Erst bei dessen Öffnen gelangt der Vorgang aus der Abzweigung 28 in den Operationsbereich 29, in dem die Fehleranzeigeleuchte 12 sowie die Stellungsmeldeleuchten 11 für die Vorderachse VA und die Hinterachse HA ausgeschaltet werden, wonach der Programmablauf in die Rechenschaltung 10 fortschreitet. Mit der Rechenschaltung 10 werden die Niveaugrenzwerte berechnet, ausgehend von dem im Sollwertspeicher 8 abgespeicherten Meßwert für die Sollhöhe H = Normalniveau NN. Es werden beispielsweise ein oberer Niveaugrenzwert ON und ein unterer Niveauwert UN berechnet. Anschließend erfolgt ein weiterer Programmablauf solange, bis z.B. in Abhängigkeit von der Fahrgeschwindigkeit ein bestimmtes Niveau durch die Niveauregelvorrichtung eingestellt wird, beispielsweise auf der Basis der Sollhöhe oder des oberen oder unteren Niveaugrenzwerts ON, UN, dementsprechend die Hydraulikanlage beaufschlagt wird. Die diesbezüglichen Steuerleitungen 30 sind in Fig.3 und 5 angegeben.

Sofern der Programmablauf bei einem nochmaligen Zündungseinschalten in der Verzweigung 25 ergibt, daß der Speicherschalter 6 betätigt bzw. der Sollwertspeicher 8 belegt ist, das ist der Fall, wenn der Speicherschalter 6 offen ist, schreitet das Programm von der Verzweigung 25 direkt in die Rechenschaltung 10 durch und es erfolgt danach die Niveauregelung. Während des Fahrens erfolgt unter Berücksichtigung der gerade gefahrenen Geschwindigkeit eine geschwindigkeitsabhängige Einstellung des Niveaus.

Die in Fig.5 dargestellte Schaltung einer Hydraulikanlage beinhaltet ein Magnetventil 31 für die Vorderachse VA, ein Magnetventil 32 für die Hinterachse HA und ein Pumpenaggregat 33, mit dem die Federbeine 16 hydraulisch beaufschlagt werden. In jeder Zuleitung 34 eines Federbeins 16 befindet sich ein Absperrventil 35, damit das Federbein 16 und sein zugehöriger Druckspeicher 36 ohne Leerung der Gesamtanlage problemlos ausgebaut werden können.

Jedes Magnetventil 31,32 hat ein Ablaßventil 37 und ein Speiseventil 38, so daß bei entsprechender Beaufschlagung über die Steuerleitungen 30 eine Anhebung des Niveaus erreicht werden kann, indem Druckmittel über die Druckmittelleitung 39, das über die zugehörige Steuerleitung 30 in Durchlaßstellung umgeschaltete Ventil 38 und über die Zuleitungen 34 erreicht werden kann, während ein Absenken des Niveaus erfolgt, indem das Ventil 37 in seine Durchlaßstellung gesteuert wird, in der Druckmittel über die Ablaufleitung 40 und einen Filter 41 zurück in einen Tank 42 gelangt, aus dem die motorangetriebene Pumpe 43 ansaugt. Das angesaugte Druckmittel gelangt entweder über zwei Filter 41 und ein Überdruckventil 44 in die Druckleitung 39, sofern dort Druckmitteldurchtritt wegen geöffneten Ventils 38 möglich ist, oder das Druckmittel gelangt über ein Durchschaltventil 45 für den Ölumlauf zurück in den Tank 42, sofern sich dieses in einer entsprechenden Schaltstellung befindet. Vorsorglich ist der Pumpe 43 ein Sicherheitsventil 46 parallel geschaltet.

## Ansprüche

1. Verfahren zum Einstellen einer Niveauregelvorrichtung für Kraftfahrzeuge (1), bei dem mindestens eine von der Fahrzeugkarosserie (9) gebildete Bezugsstelle (3) des Kraftfahrzeugs (1) in eine vorbestimmte Stellung mit einer Sollhöhe (H) gebracht wird, die unter Bezugnahme auf das Fahrwerk (14) mit einem Speicherschalter (6) abgespeichert wird, **dadurch gekennzeichnet**, daß die Bezugsstelle (3) des Kraftfahrzeugs (1) durch dessen Anheben mit einer kraftfahrzeugunabhängigen Einrichtung (4) in die durch letztere vorbestimmte Stellung (5) gebracht, in dieser Stellung (5) die Sollhöhe (H) der Bezugsstelle (3) des Kraftfahrzeugs (1) mit einer elektrischen Höhenmeßeinrichtung (2) des Kraftfahrzeugs (1) erfaßt und deren der Sollhöhe (H) entsprechender elektrischer Meßwert über den Speicherschalter (6) abgespeichert wird.

2. Verfahren nach Anspruch 1, **dadurch gekennzeichnet**, daß der Speicherschalter (6) nach dem Einschalten der Zündung wirksam wird.

3. Verfahren nach Anspruch 1 oder 2, **dadurch gekennzeichnet**, daß bei eingeschalteter Zündung und nicht betätigtem Speicherschalter (6) eine Fehleranzeige erfolgt.

4. Niveauregelvorrichtung für Kraftfahrzeuge, mit lasttragenden Federbeinen, die entsprechend einer Sollhöhe mindestens einer von der Fahrzeugkarosserie gebildeten Bezugsstelle des Kraftfahrzeugs entsprechend hydraulisch beaufschlagbar sind, mit einem die Sollhöhe unter Bezugnahme auf das Fahrwerk abspeichernden Speicherschalter, und mit einer hydraulischen Pumpeinrichtung, **dadurch gekennzeichnet**, daß die Niveauregelvorrichtung eine die Sollhöhe (H) des Kraftfahrzeugs (1) einstellende kraftfahrzeugunabhängige Einrichtung (4) aufweist, und daß an einen Rechner (7) ein den bei Sollhöhe (H) des Kraftfahr zeugs (1) mit einer Höhenmeßeinrichtung (2) des Kraftfahrzeugs (1) ermittelten Meßwert abspeichernder, mit dem Speicherschalter (6) beaufschlagbarer Sollwertspeicher (8) angeschlossen ist.

5. Vorrichtung nach Anspruch 4, **dadurch gekennzeichnet**, daß als die Sollhöhe (H) des Kraftfahrzeugs (1) einstellende Einrichtung (4) die Fahrzeugkarosserie (9) ausrichtende Wagenheber vorhanden sind.

6. Vorrichtung nach einem der Ansprüche 1 bis 5, **dadurch gekennzeichnet**, daß der Rechner (7) eine Rechenschaltung (10) zur Berechnung von in Abhängigkeit von der Fahrzeuggeschwindigkeit wirksam werdender, oberhalb und unterhalb der Sollhöhe (H) liegender Niveaugrenzwerte aufweist.

7. Vorrichtung nach einem der Ansprüche 1 bis 6, **dadurch gekennzeichnet**, daß je eine Bezugsstelle (3) für die Vorderachse (VA) und für die Hinterachse (HA) des Kraftfahrzeugs (1) vorgesehen ist, und daß für die Fehleranzeige eine in Verbindung mit Stellungsmeldeleuchten (11) beider Achsen (VA,HA) wirksame Fehleranzeigeleuchte (12) vorhanden ist.

*FIG. 1*

*FIG.2a*

*FIG.2b*

*FIG.2c*

_FIG. 3_

*Fig. 4*

```
        ╱23
       ╱
     ╱╲
    ╱    ╲                              ╱24
   ╱ Spannung ╲  J          ┌─────────────────┐
  ╱  < 1,0 V   ╲────────────│ Fehler_LED      │
   ╲          ╱             │ HA  ON   LED    │
    ╲        ╱              └─────────────────┘
     ╲    ╱
       ╲╱
        │ N
        │
        │       ╱25                          ╱26
       ╱╲      ╱
      ╱  ╲
     ╱EEPROM╲
    ╱   8    ╲  J        ┌──────────────┐
   ╱ Schalter ge-╲───────│  Meßwerte    │  ╱27
    ╲ schlossen?╱        │ VA + HA in   │
     ╲        ╱          │ EEPROM  8    │
       ╲╱                │ speichern    │
        │ N             └──────────────┘
        │                       │
        │                       │        ┌──────────────────┐
        │                       │        │ Fehler_LED (EIN)  │
        │                       │        │ VA + HA  (NN)     │
        │                      ╱╲        │ LED (EIN)         │
        │                     ╱  ╲       └──────────────────┘
        │                    ╱EEPROM╲
        │                   ╱   8    ╲ J      ╱28
        │                  ╱ Schalter ge-╲────────
        │                   ╲ schlossen?╱
        │                    ╲        ╱
        │                      ╲╱
        │                       │ N
        │                       │
        │                ┌──────────────┐
        │                │ Fehler LED(AUS)│  ╱29
        │                │ VA+HA (NN)    │
        │                │ LED (AUS)     │
        │                └──────────────┘
        │
  ┌──────────────┐
  │ Berechnung der│
  │ Niveaugrenzwerte│── 10
  │ für VA+HA     │
  │ ON   NN   UN  │
  └──────────────┘
```

FIG.5